**Europäisches Patentamt**

**European Patent Office**

**Office européen des brevets**

(19)

(11) Publication number : **0 479 814 B1**

(12)

# EUROPEAN PATENT SPECIFICATION

(45) Date of publication of patent specification :
20.10.93 Bulletin 93/42

(51) Int. Cl.$^5$ : **C22B 3/00**

(21) Application number : **90909059.9**

(22) Date of filing : **18.06.90**

(86) International application number :
**PCT/GB90/00938**

(87) International publication number :
**WO 90/15887 27.12.90 Gazette 90/29**

(54) **DISSOLVING VALUES OF PLATINUM GROUP METALS FROM ORES AND CONCENTRATES.**

(30) Priority : **19.06.89 GB 8914037**

(43) Date of publication of application :
**15.04.92 Bulletin 92/16**

(45) Publication of the grant of the patent :
**20.10.93 Bulletin 93/42**

(84) Designated Contracting States :
**AT BE DE DK ES FR GB IT LU NL SE**

(56) References cited :
**DE-C- 95 444**
**GB-A- 2 181 452**
**US-A- 3 545 965**
**US-A- 4 561 947**
**US-A- 4 645 535**

(73) Proprietor : **UNIVERSITY COLLEGE CARDIFF CONSULTANTS LTD.**
**67 Park Place**
**Cardiff, CF1 3AT (GB)**

(72) Inventor : **WILLIAMS, Peter, Alan**
**64 Cardiff Road Dinas Powys**
**South Glamorgan CF6 4JX (GB)**
Inventor : **ANTHONY, Elizabeth, Youngblood**
**2320 North Virginia Road**
**El Paso, TX 79902 (US)**

(74) Representative : **Neville, Peter Warwick**
**Patents Department British Technology Group**
**Ltd 101 Newington Causeway**
**London SE1 6BU (GB)**

EP 0 479 814 B1

## Description

This invention relates to a method of dissolving values of platinum group metals from ores and concentrates, for subsequent treatment for recovery of the metal. The "platinum group" of metals is: ruthenium, rhodium, palladium, osmium, iridium and platinum. The method is especially applicable to palladium and platinum, which are normally regarded, when in ore, as difficult to raise to an oxidation number at which they will form water-soluble compounds.

Although alluvial and other mineral deposits of platinum group metals are the result of natural concentration processes involving weathering and gravity-separation phenomena, considerable additional treatment is required to yield a product suitable for marketing. After treatments which might typically include crushing, froth flotation and gravity separation, part of the resultant material might be sent directly to the refinery. The remainder is concentrated further by smelting, oxygen blowing, magnetic separation, and pressure leaching (removing e.g. nickel which has been solubilised) to yield a final concentrate, a 60% residue of platinum group metals.

Most refining procedures take advantage of the ready solubility of platinum and palladium (and gold) in aqua regia, which does not dissolve the other platinum group metals (ruthenium, rhodium, osmium and iridium) and indeed it is conventional wisdom that only highly oxidising substances of this type will dissolve elemental palladium and platinum. (US Patent 4337226 suggests $H_2SO_4$ plus either NaOCl or $H_2O_2$.) Platinum is indeed known for its property of remaining unattacked by for example hot sulphur dioxide, and functioning for years as a catalyst for oxidising that gas at 600°C. It is therefore most unexpected that sulphur-oxygen compounds can be used to dissolve values of platinum group metals.

According to the present invention, a method of dissolving platinum group metals from ores or concentrates comprises lixiviating the ore or concentrate in the presence of an oxidant with an aqueous solution containing a material being a compound or polyelemental anion having an atom in a lower oxidation state, and which material is stable in the presence of the oxidant and can co-ordinate a platinum group cation through the said atom, characterised in that said oxidant is oxygen in the air, most conveniently at ambient temperature and pressure. A "lower oxidation state" is any non-zero oxidation state lower than the highest normally attained, which in the case of for example sulphur is taken as 6, and arsenic 5. The counter ion of the anion if present may be an alkaline earth or alkali metal, conveniently sodium. The solution is preferably at least $10^{-4}$M in said atom, preferably at least $10^{-3}$M, most preferably at least $10^{-2}$M, and usefully at least 0.04M. It is preferably under 1M, more preferably under ½M.

Examples of such materials are: $As(OH)_3$ or salts thereof; organic sulphides and thio derivatives e.g. thioketones such as thiourea $H_2NCSNH_2$ see US-A-45 61 547 ; thiosulphate $S_2O_3^{--}$; dithionale $S_2O_6^{--}$ and polythionate $(O_3S\text{-}S_x\text{-}SO_3)^{--}$, and the selenium and tellurium analogues (where they exist) of these sulphur materials. As lixiviants in extractive metallurgy go, some of these are not costly and some are relatively mild environmentally.

In the case of (for example) thiosulphate, it is postulated that because the thiosulphate ion is a soft donor (via sulphur), it effectively lowers the redox potential at which the metals are oxidized. An important cooperative effect in practice is its fast rate of oxidation of the metals, especially palladium and platinum, particularly in the presence of the appropriate ligands, to form coordination complexes under ambient conditions.

This discovery represents a novel way of extracting platinum group elements from their ores and concentrates by a simple leaching procedure using cheap and readily available reagents. It is also the case that since bulk leaching operations are relatively inexpensive, lower grade ores than have been hitherto thought to be economic and deposits which have hitherto not been mined for their platinum group metals content could now be exploited, such as the low-grade deposits of Pt and Pd concentrated during weathering of mafic and ultramafic rocks such as in the Fifield, NSW area and in weathered sulphide ores (gossans and the like) overlying primary sulphides in certain of the deposits of the West Australian shield.

Arsenic (III) species preferably in acid solution (more preferably pH 3-4) may be used especially for mobilizing palladium.

Preferably, means are employed to inactivate microbes such as Thiobacilli which could mediate the concentrations of the lixiviants during the dissolution.

Preferably other ligating anions are additionally present such as halide. Chloride is convenient, and bromide and iodide are better although in practice disproportionately more costly.

The duration of the lixiviation is preferably at least 7 days, more preferably at least 12 days.

The resulting solution of platinum group metal(s) is then normally separated from the residual solids, and then treated to recover the metal(s).

The invention will now be decribed by way of example.

EP 0 479 814 B1

EXAMPLE 1

A fixed mass of comminuted ore containing platinum and palladium was leached with a fixed volume of 0.001 molar aqueous sodium thiosulphate under recycling conditions at ambient temperatures (ca 20°C) in the presence of air. The pH of the solution was maintained at a fixed value above 6 (otherwise the thiosulphate would have decomposed) via the use of sodium carbonate $Na_2CO_3$, sodium hydrogen carbonate $NaHCO_3$, sodium hydroxide NaOH, lime CaO or $Ca(OH)_2$ and/or calcium carbonate $CaCO_3$. The rate of dissolution of platinum and palladium was monitored from time to time by taking samples and analysing for dissolved metals with the results below. When amounts in solution were judged to be sufficient, the solution was filtered to remove solids and the dissolved values recovered by (i) oxidation of the contained thiosulphate to produce a precipitate containing the values or (ii) reduction of the values with an appropriate reducing agent e.g. zinc to precipitate the platinum group metals as a concentrate ready for further refining.

| Thiosulphate concentration | pH | Palladium Concentration in Solution after 14 days | after 23 days |
|---|---|---|---|
| 0.001M | 8.9 | 35 ppm | — |
| 0.01M | 8.9 | 32 ppm | 41 ppm |
| 0.05M | 8.5 | 44 ppm | 56 ppm |
| 0.1M | 8.5 | 70 ppm | 97 ppm (32 days) |

EXAMPLE 2

Leaching is made more effective in certain instances for certain metals by addition of auxiliary ligands. Example 1 was repeated with the additional reagent sodium chloride present in solution at a concentration of 0.01 molar. Iridium was leached from the ore.

EXAMPLE 3

Palladium was leached from a sample of ore in a manner analogous to that described above, but using (instead of thiosulphate) sodium arsenite or arsenic (III) oxide dissolved in water (0.05 molar in arsenic in either case) and which was made acid to a fixed pH below 5 with hydrochloric acid, in the presence of air at ambient temperatures. At higher values of pH, arsenic (III) can form $As(OH)_4^-$, a hard ligand in which moreover the arsenic atom is "buried" and no longer available to ligate palladium. The HCl both prevented this and provided $Cl^-$ ions as auxiliary ligands.

After 15 days in each case, the palladium concentration in the solution was measured, and compared with the result when arsenic was omitted.

| pH held at | ppm Pd using arsenic | ppm Pd omitting arsenic |
|---|---|---|
| 2 | 90 | 20 |
| 3 | 175 | 4 |
| 4 | 16 | not detectable |
| 5 | 5 | not detectable |

**Claims**

1. A method of dissolving platinum group metals from ores or concentrates, comprising lixiviating the ore or concentrate in the presence of an oxidant with an aqueous solution containing a material being a compound or polyelemental anion having an atom in a lower oxidation state as hereinbefore defined, and which material is stable in the presence of the oxidant and can co-ordinate a platinum group cation through the said atom, characterised in that said oxidant is oxygen in the air.

3

2. A method according to Claim 1, wherein the counter ion of the anion is an alkaline earth or alkali metal.

3. A method according to Claim 1 or 2, wherein the aqueous solution is at least $10^{-4}$M in said atom.

4. A method according to Claim 3, wherein the solution is at least $10^{-3}$M in said atom.

5. A method according to Claim 4, wherein the solution is at least $10^{-2}$M in said atom.

6. A method according to Claim 5, wherein the solution is at least 0.04M in said atom.

7. A method according to any preceding claim, wherein the aqueous solution is under 1M in said atom.

8. A method according to Claim 7, wherein the solution is under $\frac{1}{2}$M in said atom.

9. A method according to any preceding claim, wherein the platinum group metal is platinum and/or palladium.

10. A method according to any preceding claim, wherein the said material is: $As(OH)_3$ or a salt thereof; or thiosulphate, dithionate or polythionate or its selenium or tellurium analogue.

11. A method according to Claim 10, wherein palladium is dissolved and wherein the said material is arsenic(III).

12. A method according to Claim 11, wherein the arsenic(III) is in acid solution.

13. A method according to Claim 12, wherein the arsenic(III) solution has a pH of 3 to 4.

14. A method according to any preceding claim, further comprising means to inactivate microbes during the dissolution.

15. A method according to any preceding claim, wherein other ligating anions are additionally present.

16. A method according to Claim 15, wherein said other ligating anions comprise halide.

17. A method according to any preceding claim, wherein the duration of the lixiviation is at least 7 days.

18. A method according to Claim 17, wherein the duration of the lixiviation is at least 12 days.

19. A method according to any preceding claim, further comprising separating the resulting solution of platinum group metal(s) from the residual solids.

20. A method according to Claim 19, further comprising treating the separated solution to recover the metal(s).

## Patentansprüche

1. Verfahren zum Herauslösen von Metallen der Platingruppe aus Erzen oder Konzentraten, umfassend das Auslaugen des Erzes oder Konzentrats in Gegenwart eines Oxidationsmittels mit einer wäßrigen Lösung, enthaltend ein Material, das eine Verbindung oder ein Mehrelemente-Anion mit einem Atom in niedrigerem Oxidationszustand ist, wie oben definiert, und wobei das Material in Gegenwart des Oxidationsmittels stabil ist, und ein Kation der Platingruppe über dieses Atom koordinativ binden kann, dadurch gekennzeichnet, daß das Oxidationsmittel Luftsauerstoff ist.

2. Verfahren nach Anspruch 1, wobei das Gegenion des Anions ein Erdalkali- oder Alkalimetall ist.

3. Verfahren nach Anspruch 1 oder 2, wobei die wäßrige Lösung, bezogen auf dieses Atom, mindestens $10^{-4}$M ist.

4. Verfahren nach Anspruch 3, wobei die Lösung, bezogen auf dieses Atom, mindestens $10^{-3}$M ist.

4

5. Verfahren nach Anspruch 4, wobei die Lösung, bezogen auf dieses Atom, mindestens $10^{-2}$M ist.

6. Verfahren nach Anspruch 5, wobei die Lösung, bezogen auf dieses Atom, mindestens 0,04M ist.

7. Verfahren nach einem der vorangehenden Ansprüche, wobei die Lösung, bezogen auf dieses Atom, < 1M ist.

8. Verfahren nach Anspruch 7, wobei die Lösung, bezogen auf dieses Atom, < 0,5M ist.

9. Verfahren nach einem der vorangehenden Ansprüche, wobei das Metall der Platingruppe Platin und/oder Palladium ist.

10. Verfahren nach einem der vorangehenden Ansprüche, wobei das Material As(OH)$_3$ oder ein Salz davon oder Thiosulfat, Dithionat oder Polythionat oder deren Selenium- oder Tellur-Analoges ist.

11. Verfahren nach Anspruch 10, wobei Palladium herausgelöst wird und wobei das Material Arsen(III) ist.

12. Verfahren nach Anspruch 11, wobei das Arsen(III) in saurer Lösung vorliegt.

13. Verfahren nach Anspruch 12, wobei die Arsen(III)-Lösung einen pH-Wert von 3 bis 4 hat.

14. Verfahren nach einem der vorangehenden Ansprüche, umfassend ferner Maßnahmen, um Mikroben während des Herauslösens zu inaktivieren.

15. Verfahren nach einem der vorangehenden Ansprüche, wobei andere Anionen als Liganden zusätzlich vorhanden sind.

16. Verfahren nach Anspruch 15, wobei die anderen Anionen als Liganden Halogenid umfassen.

17. Verfahren nach einem der vorangehenden Ansprüche, wobei die Dauer des Auslaugens mindestens 7 Tage beträgt.

18. Verfahren nach Anspruch 17, wobei die Dauer des Auslaugens mindestens 12 Tage beträgt.

19. Verfahren nach einem der vorangehenden Ansprüche, ferner umfassend das Abtrennen der erhaltenen Lösung des Metalls/der Metalle der Platingruppe von den restlichen Feststoffen.

20. Verfahren nach Anspruch 19, ferner umfassend die Behandlung der abgetrennten Lösung zur Gewinnung des Metalls/der Metalle.


**Revendications**

1. Procédé pour dissoudre des métaux du groupe du platine à partir de minerais ou de concentrés, comprenant la lixiviation du minerai ou du concentré en présence d'un oxydant avec une solution aqueuse contenant une matière qui est un composé ou un anion polyélémentaire possédant un atome dans un degré d'oxydation inférieur comme défini ci-dessus, et cette matière étant stable en la présence de l'oxydant et pouvant co-ordiner un cation du groupe du platine par ledit atome, caractérisé en ce que ledit oxydant est l'oxygène de l'air.

2. Procédé selon la revendication 1, dans lequel l'ion antagoniste de l'anion est un métal alcalino-terreux ou alcalin.

3. Procédé selon la revendication 1 ou 2, dans lequel la solution aqueuse est au moins $10^{-4}$M en ledit atome.

4. Procédé selon la revendication 3, dans lequel la solution est au moins $10^{-3}$M en ledit atome.

5. Procédé selon la revendication 4, dans lequel la solution est au moins $10^{-2}$M en ledit atome.

6. Procédé selon la revendication 5, dans lequel la solution est au moins 0,04M en ledit atome.

7. Procédé selon l'une des revendications précédentes, dans lequel la solution aqueuse est inférieure à 1M en ledit atome.

8. Procédé selon la revendication 7, dans lequel la solution est inférieure à 1/2M en ledit atome.

9. Procédé selon l'une des revendications précédentes, dans lequel le métal du groupe du platine est le platine et/ou le palladium.

10. Procédé selon l'une des revendications précédentes, dans lequel ladite matière est : $As(OH)_3$ ou un de ses sels; ou un thiosulfate, dithionate ou polythionate, ou un de ses analogues du sélénium ou du tellure.

11. Procédé selon la revendication 10, dans lequel le palladium est dissous et dans lequel ladite matière est de l'arsenic (III).

12. Procédé selon la revendication 11, dans lequel l'arsenic (III) est en solution acide.

13. Procédé selon la revendication 12, dans lequel la solution d'arsenic (III) a un pH de 3 à 4.

14. Procédé selon l'une des revendications précédentes, comprenant en outre des moyens pour inactiver les microbes pendant la dissolution.

15. Procédé selon l'une des revendications précédentes, dans lequel d'autres anions de ligation sont présents de manière additionnelle.

16. Procédé selon la revendication 15, dans lequel lesdits autres anions de ligation comprennent un halogénure.

17. Procédé selon l'une des revendications précédentes, dans lequel la durée de la lixiviation est d'au moins 7 jours.

18. Procédé selon la revendication 17, dans lequel la durée de la lixiviation est d'au moins 12 jours.

19. Procédé selon l'une des revendications précédentes, comprenant en outre la séparation de la solution résultante de métal (métaux) du groupe du platine à partir des résidus solides.

20. Procédé selon la revendication 19, comprenant en outre le traitement de la solution séparée pour la récupération du métal (des métaux).